# EUROPEAN PATENT APPLICATION

(11) **EP 4 152 557 A1**
(43) Date of publication of application: **22.03.2023**
(21) Application number: 21867863.9
(22) Date of filing: 29.07.2021
(51) Int. Cl.: H02J 7/00, H01M 10/44

(54) **BATTERY CHARGING METHOD, BATTERY MANAGEMENT SYSTEM, AND CHARGING AND DISCHARGING DEVICE**

(71) Applicant: Contemporary Amperex Technology Co., Limited, Jiaocheng District Ningde City, Fujian 352100 (CN)
(72) Inventor: YAN, Yu, Ningde, Fujian 352100 (CN); ZUO, Xiyang, Ningde, Fujian 352100 (CN); LIU, Diping, Ningde, Fujian 352100 (CN); LI, Haili, Ningde, Fujian 352100 (CN); LI, Zhanliang, Ningde, Fujian 352100 (CN); DAN, Zhimin, Ningde, Fujian 352100 (CN)
(74) Representative: Herrero & Asociados, S.L.
(86) International application number: PCT/CN2021/109207
(87) International publication number: WO 2023/004673

(57) **Abstract**

The embodiments of the present application provide a method for charging a battery, a battery management system, and a charge and discharge device, which are capable of guaranteeing safety performance of the battery. The method for charging the battery includes: acquiring, by a battery management system (BMS), a first charge current and sending the first charge current to a charge and discharge device, thus making the charge and discharge device charge the battery based on the first charge current; if a first accumulated charge quantity of the battery is greater than or equal to a first accumulated charge quantity threshold value and a voltage of a battery cell of the battery does not exceed a full charge voltage of the battery cell, acquiring, by the BMS, a first discharge current and sending the first discharge current to the charge and discharge device, thus making the charge and discharge device control the battery to discharge based on the first discharge current; and if a first accumulated discharge quantity of the battery is greater than or equal to a first accumulated discharge quantity threshold value, acquiring, by the BMS, a second charge current, and sending the second charge current to the charge and discharge device, thus making the charge and discharge device charge the battery based on the second charge current.

## Description

### TECHNICAL FIELD

The present application relates to the field of batteries, in particular to a method for charging a battery, a battery management system, and a charge and discharge device.

### BACKGROUND

Along with the development of the era, due to the advantages of high environmental friendliness, low noise, low use cost and the like, the electric vehicle has a huge market prospect, can effectively promote energy conservation and emission reduction, and is beneficial to the development and progress of the society.

For the electric vehicles and related fields thereof, the battery technology is an important factor related to the development of the electric vehicles, in particular, the safety performance of the battery influences the development and application of battery related products, and influences the acceptance of the public for the electric vehicles. Hence, how to guarantee the safety performance of the battery is a to-be-solved technical problem.

### SUMMARY

The embodiments of the present application provide a method for charging a battery, a battery management system, and a charge and discharge device, and the safety performance of the battery can be guaranteed.

In a first aspect, a method for charging a battery is provided. The method includes: acquiring, by a battery management system (BMS), a first charge current, and sending the first charge current to a charge and discharge device, thus making the charge and discharge device charge the battery based on the first charge current; if a first accumulated charge quantity of the battery is greater than or equal to a first accumulated charge quantity threshold value and a voltage of a battery cell of the battery does not exceed a full charge voltage of the battery cell, acquiring, by the BMS, a first discharge current, and sending the first discharge current to the charge and discharge device, thus making the charge and discharge device control the battery to discharge based on the first discharge current; and if a first accumulated discharge quantity of the battery is greater than or equal to a first accumulated discharge quantity threshold value, acquiring, by the BMS, a second charge current, and sending the second charge current to the charge and discharge device, thus making the charge and discharge device charge the battery based on the second charge current.

With the technical solution of the embodiments of the present application, a charging method which may be achieved between the charge and discharge device and the BMS is provided. In the process of charging a battery, the charge and discharge of the battery may be achieved by the charge and discharge device based on the first charge current and the first discharge current sent by the BMS, thereby avoiding the problems of heating, lithium ion aggregation and the like of the battery caused by continuous charge, and then avoiding the safety problems of the battery, such as battery combustion or explosion, caused by heating, lithium ion aggregation and the like, and the safety performance of the battery is guaranteed.

In a possible implementation mode, the method further includes if a second accumulated charge quantity of the battery is greater than or equal to a second accumulated charge quantity threshold value and the voltage of the battery cell of the battery does not exceed the full charge voltage of the battery cell, acquiring, by the BMS, a second discharge current, and sending the second discharge current to the charge and discharge device, thus making the charge and discharge device control the battery to discharge based on the second discharge current.

With the technical solution of the implementation mode, the battery may be further discharged again after completing charge, discharge and recharge of the battery through information interaction between the BMS and the charge and discharge device. In accordance with this mode, the embodiment of the present application may further provide a multi-cycle charge and discharge method, the charge and discharge processes are sequentially and cyclically carried out to achieve gradual charge of the battery on the basis of ensuring the performance of the battery.

In a possible implementation mode, the method further includes: if the voltage of the battery cell of the battery exceeds the full charge voltage of the battery cell, sending a charging stop command to the charge and discharge device by the BMS, where the charging stop command is used for instructing the charge and discharge device to stop charging the battery.

In a possible implementation mode, a charge rate of the first charge current and/or the second charge current ranges from 2C to 10C.

With the technical solution of the implementation mode, on the basis of guaranteeing the safety performance of the battery, the charge rate of the first charge current and/or the second charge current ranges from 2C to 10C, high-current quick charge may be achieved to increase the charge quantity of the battery during a single charge and to achieve quick charge.

In addition, due to the limitation that lithium ions are gathered at a negative electrode in the continuous charge process, the charge current is also limited, and thus quick charge of the battery cannot be achieved by using continuous high current; however, in accordance with the technical solution of the embodiments of the present application, the battery is charged by using the high current, and the battery is discharged after one-time high-current charge to release the lithium ions gathered at the negative electrode of the battery in the charge process, and then the battery may be subsequently charged by utilizing the high current again, thus achieving quick charge of the battery.

In a possible implementation mode, a discharge rate the first discharge current ranges from 0.1C to 1C.

With the technical solution of the implementation mode, the discharge rate the first discharge current ranges from 0.1C to 1C to achieve low current discharge, which aims at releasing lithium ions gathered at the negative electrode of the battery through low-current discharge of the battery without causing excessive loss of charged electric quantity in the battery.

In a possible implementation mode, a ratio of the first accumulated discharge quantity threshold value to the first accumulated charge quantity threshold value is less than or equal to 10%.

With the technical solution of the implementation mode, the charge quantity of the battery in the charge process and the discharge quantity of the battery in the discharge process may be better controlled by setting the ratio of an accumulated discharge quantity threshold value in the discharge process to an accumulated discharge quantity threshold value in the charge process, thus the discharge quantity is relatively low, and the excessive loss of the charged electric quantity in the battery is avoided.

In a possible implementation mode, acquiring a first charge current by the BMS includes: acquiring, by the BMS, a state parameter of a battery, and determining a first charge current according to the state parameter; and/or, acquiring a first discharge current by the BMS includes: acquiring, by the BMS, a state parameter of the battery, and determining the first discharge current according to the state parameter; and/or, acquiring a second charge current by the BMS includes: acquiring, by the BMS, a state parameter of the battery, and determining the second charge current according to the state parameter; where the state parameter of the battery includes at least one of the following parameters: a battery temperature, a battery voltage, a battery current, a state of charge of the battery, and a state of health of the battery.

With the technical solution of the implementation mode, when at least one of the first charge current, the second charge current and the first discharge current is a current determined according to the state parameter of the battery, which may be better adapted to the current state parameter of the battery to improve the charge efficiency and/or discharge efficiency of the battery without damaging the battery.

In a possible implementation mode, acquiring, by the BMS, the first charge current and sending the first charge current to the charge and discharge device includes: acquiring, by the BMS, the first charge current regularly, and sending the first charge current to the charge and discharge device regularly; and/or acquiring, by the BMS, a first discharge current and sending the first discharge current to the charge and discharge device includes: acquiring, by the BMS, the first discharge current regularly, and sending the first discharge current to the charge and discharge device regularly; and/or acquiring, by the BMS, a second charge current and sending the second charge current to the charge and discharge device includes: acquiring, by the BMS, the second charge current regularly, and sending the second charge current to the charge and discharge device regularly.

In the implementation mode, in the process that the charge and discharge device performs single charge and/or single discharge on the battery, the charge current and/or discharge current are/is sent by the BMS regularly. On the one hand, the charge current and/or discharge current may be adjusted regularly through the implementation mode to improve the charge and discharge efficiency, and on the other hand, the charge current and/or the discharge current which are sent regularly may indicate that the states of the BMS and the battery are normal, thus facilitating the charge and discharge device to continuously charge the battery or control the battery to discharge conveniently to guarantee the safety performance of the battery.

In a possible implementation mode, the method further includes: acquiring, by the BMS, a first charge voltage, and sending the first charge voltage to the charge and discharge device, where the first charge current and the first charge voltage are carried in a first battery charge lab (BCL) message; and/or, the method further includes: acquiring, by the BMS, a first discharge voltage, and sending the first discharge voltage to the charge and discharge device, where the first discharge current and the first discharge voltage are carried in a second BCL message; and/or, the method further includes: acquiring, by the BMS, a second charge voltage, and sending the second charge voltage to the charge and discharge device, where the second charge current and the second charge voltage are carried in a third BCL message.

In the implementation mode, the communication between the BMS and the charge and discharge device may be compatible with a communication protocol between an existing charger and the BMS. Therefore, the communication between the BMS and the charge and discharge device is convenient to achieve, and has a good application prospect.

In a second aspect, a method for charging a battery is provided. The method includes: receiving, by a charge and discharge device, a first charge current sent by a battery management system (BMS), and charging a battery based on the first charge current; receiving, by the charge and discharge device, a first discharge current sent by the BMS, and controlling the battery to discharge based on the first discharge current, where the first discharge current is a discharge current sent by the BMS when a first accumulated charge quantity of the battery is greater than or equal to a first accumulated charge quantity threshold value and a voltage of a battery cell of the battery does not exceed a full charge voltage of the battery cell; receiving, by the charge and discharge device, a second charge current sent by the BMS, and charging the battery based on the second charge current, where the second charge current is a charge current sent by the BMS when a first accumulated discharge quantity of the battery is greater than or equal to a first accumulated discharge quantity threshold value.

In a possible implementation mode, the method further includes: receiving, by the charge and discharge device, a second discharge current sent by the BMS, and controlling the battery to discharge based on the second discharge current, where the second discharge current is a discharge current sent by the BMS when a second accumulated charge quantity of the battery is greater than or equal to a second accumulated charge quantity threshold value and the voltage of the battery cell of the battery does not exceed the full charge voltage of the battery cell.

In a possible implementation mode, the method further includes: receiving, by the charge and discharge device, a charge stop command sent by the BMS, and stopping charging the battery, where the charge stop command is a command sent by the BMS when the voltage of the battery cell of the battery cell exceeds the full charge voltage of the battery cell.

In a possible implementation mode, a charge rate of the first charge current and/or the second charge current ranges from 2C to 10C.

In a possible implementation mode, a discharge rate the first discharge current ranges from 0.1C to 1C.

In a possible implementation mode, a ratio of the first accumulated discharge quantity threshold value to the first accumulated charge quantity threshold value is less than or equal to 10%.

In a possible implementation mode, at least one of the first charge current, the first discharge current and the second charge current is determined by the BMS according to a state parameter of the battery, where the state parameter of the battery includes at least one of the following parameters: a battery temperature, a battery voltage, a battery current, a state of charge of the battery, and a state of health of the battery.

In a possible implementation mode, receiving, by the charge and discharge device, the first charge current sent by the BMS includes: regularly receiving, by the charge and discharge device, the first charge current sent by the BMS; and/or, receiving, by the charge and discharge device, the first discharge current sent by the BMS includes: regularly receiving, by the charge and discharge device, the first discharge current sent by the BMS; and/or receiving, by the charge and discharge device, the second charge current sent by the BMS includes: regularly receiving, by the charge and discharge device, the second charge current sent by the BMS.

In a possible implementation mode, the method further includes: receiving, by the charge and discharge device, the first charge voltage sent by the BMS, where the first charge voltage and the first charge current are carried in a first battery charge lab (BCL) message; and/or the method further includes: receiving, by the charge and discharge device, the first discharge voltage sent by the BMS, where the first discharge voltage and the first discharge current are carried in a second BCL message; and/or, the method further includes: receiving, by the charge and discharge device, the second charge voltage sent by the BMS, where the second charge voltage and the second charge current are carried in a third BCL message.

In a third aspect, a battery management system (BMS) is provided. The BMS includes: an acquisition unit configured to acquire a first charge current; a sending unit configured to send the first charge current to a charge and discharge device, thus making the discharge device charge a battery based on the first charge current; a processing unit configured to determine configured to acquire a first accumulated charge quantity of the battery is greater than or equal to a first accumulated charge quantity threshold value and a voltage of a battery cell of the battery does not exceed a full charge voltage of the battery cell and the acquisition unit further configured to acquire a first discharge current; where the sending unit is further configured to send the first discharge current to the charge and discharge device, thus making the charge and discharge device control the battery to discharge based on the first discharge current; the processing unit is configured to configured to determine a first accumulated discharge quantity of the battery is greater than or equal to a first accumulated discharge quantity threshold value and the acquisition unit is further configured to acquire a second charge current; and the sending unit is further configured to send the second charge current to the charge and discharge current, thus making the charge and discharge device charge the battery based on the second charge current.

In a fourth aspect, a charge and discharge device is provided. The charge and discharge device includes: a receiving unit configured to receive a first charge current sent by a battery management system BMS; a processing unit configured to charge a battery based on the first charge current; the receiving unit is further configured to receive a first discharge current sent by the BMS, the processing unit is further configured to control the battery to discharge based on the first discharge current, where the first discharge current is a discharge current sent by the BMS when a first accumulated charge quantity of the battery is greater than or equal to a first accumulated charging threshold value and a voltage of a battery cell of the battery does not exceed a full charge voltage of the battery cell; the receiving unit is further configured to receive a second charge current sent by the BMS, the processing unit is further configured to charge the battery based on the second charge current, where the second charge current is a charge current sent by the BMS when a first accumulated discharge quantity of the battery is greater than or equal to a first accumulated discharge quantity threshold value.

In a fifth aspect, a charge and discharge device is provided. The charge and discharge device includes a control unit and a power conversion unit; the control unit is configured to receive a first charge current sent by a BMS, and control the power conversion unit to charge a battery based on the first charge current; receive a first discharge current sent by the BMS, and control the power conversion unit based on the first discharge current to make the battery discharge, where the first discharge current is a discharge current sent by the BMS when a first accumulated charge quantity of the battery is greater than or equal to a first accumulated charge quantity threshold value and a voltage of a battery cell of the battery does not exceed a full charge voltage of the battery cell; receive a second charge current sent by the BMS, and control the power conversion unit to charge the battery based on the second charge current, where the second charge current is a charge current sent by the BMS when a first accumulated discharge quantity of the battery is greater than or equal to a first accumulated discharge quantity threshold value.

In a possible implementation mode, the power conversion unit is connected to an alternating current (AC) power source and a battery, where the power conversion unit includes an alternating current/direct current (AC/DC) converter and a direct current/direct current (DC/DC) converter; the control unit is configured to control the AC/DC converter and the DC/DC converter to charge the battery through the AC power source based on the first charge current, and the control unit is configured to control the AC/DC converter and the DC/DC converter to charge the battery through the AC power source based on the second charge current.

In a possible implementation mode, the AC/DC converter is a bidirectional AC/DC converter, the DC/DC converter is a bidirectional DC/DC converter, the control unit is configured to control the bidirectional AC/DC converter and the bidirectional DC/DC converter based on the first discharge current, thus making the battery discharge electric power to the AC power source.

In a possible implementation mode, the control unit is further configured to: receive a second discharge current sent by the BMS, and control the bidirectional AC/DC converter and the bidirectional DC/DC converter based on the second discharge current, thus making the battery discharge electric power to the AC power source, where the second discharge current is a discharge current sent by the BMS when a second accumulated charge quantity of the battery is greater than or equal to a second accumulated charge quantity threshold value and the voltage of the battery cell of the battery does not exceed a full charge voltage of the battery cell.

In a possible implementation mode, the control unit is further configured to: receive a charge stop command sent by the BMS, and control the bidirectional AC/DC converter and the bidirectional DC/DC converter to stop charging the battery based on the charge stop command, where the charge stop command is a command sent by the BMS when the voltage of the battery cell of the battery exceeds the full charge voltage of the battery cell.

In a possible implementation mode, a charge rate of the first charge current and/or the second charge current ranges from 2C to 10C.

In a possible implementation mode, a discharge rate the first discharge current ranges from 0.1C to 1C.

In a possible implementation mode, a ratio of the first accumulated discharge quantity threshold value to the first accumulated charge quantity threshold value is less than or equal to 10%.

In a possible implementation mode, at least one of the first charge current, the first discharge current and the second charge current is determined by the BMS according to a state parameter of the battery, where the state parameter of the battery includes at least one of the following parameters: a battery temperature, a battery voltage, a battery current, a state of charge of the battery, and a state of health of the battery.

In a possible implementation mode, the control unit is configured to regularly receive the first charge current sent by the BMS; and/or, the control unit is configured to regularly receive the first discharge current sent by the BMS; and/or, the control unit is configured to regularly receive the second charge current sent by the BMS.

Alternatively, the control unit is further configured to receive a first charge voltage sent by the BMS, where the first charge voltage and the first charge current are carried in a first battery charge lab (BCL) message; and/or, the control unit is further configured to receive a first discharge voltage sent by the BMS, where the first discharge voltage and the first discharge current are carried in a second BCL message; and/or, the control unit is further configured to receive a second charge voltage sent by the BMS, where the second charge voltage and the second charge current are carried in a third BCL message.

In a sixth aspect, a battery management system BMS is provided. The BMS includes a processor and a storage; the storage is configured to store a computer program, the processor is configured to call the computer program to execute methods as described above in the first aspect and in any of the possible implementation modes of the first aspect.

In a seventh aspect, a charge and discharge device is provided. The charge and discharge device includes a processor and a storage; the storage is configured to store a computer program, the processor is configured to call the computer program to execute methods as described above in the second aspect and in any of the possible implementation modes of the second aspect.

### BRIEF DESCRIPTION OF DRAWINGS

To illustrate the technical solutions of the embodiments of the present application more clearly, the drawings required to be used in the embodiments of the present application are simply introduced below. Apparently, the drawings described below are only some embodiments of the present application, for those of ordinary skill in the art, other drawings may be derived from the accompanying drawings without creative efforts.
FIG. 1 is an architecture diagram of a charge system to which one embodiment of the present application is applicable;
FIG. 2 is a schematic flow block diagram of a method for charging a battery in accordance with an embodiment of the present application;
FIG. 3 is a schematic block flow diagram of another method for charging a battery in accordance with an embodiment of the present application;
FIG. 4 is a schematic oscillogram of a charge current and a discharge current of a battery in accordance with an embodiment of the present application;
FIG. 5 is a schematic flow block diagram of another method for charging a battery in accordance with an embodiment of the present application;
FIG. 6 is a schematic flow block diagram of another method for charging a battery in accordance with an embodiment of the present application;
FIG. 7 is a schematic flow block diagram of another method for charging a battery in accordance with an embodiment of the present application;
FIG. 8 is a schematic flow block diagram of another method for charging a battery in accordance with an embodiment of the present application;
FIG. 9 is a schematic structure block diagram of a battery management system (BMS) in accordance with an embodiment of the present application;
FIG. 10 is a schematic structure block diagram of a charge and discharge device in accordance with an embodiment of the present application;
FIG. 11 is a schematic structure block diagram of another charge and discharge device in accordance with an embodiment of the present application;
FIG. 12 is a schematic structure block diagram of a power conversion unit in a charge and discharge device in accordance with an embodiment of the present application;
FIG. 13 is a schematic structure block diagram of an electronic device in accordance with one embodiment of the present application.

### DESCRIPTION OF EMBODIMENTS

The embodiments of the present application are further described in detail below in conjunction with the accompanying drawings and the embodiments. The following detailed description of the embodiments and the accompanying drawings serve to illustratively describe the principles of the present application, but are not intended to limit the scope of the present application, i.e., the present application is not limited to the described embodiments.

In the description of the present application, it should be noted that unless otherwise specified, "plurality" means two or more; orientation o positional relationships indicated by the terms "upper," "lower," "left," "right," "inner," "outer," and the like are only for convenience of description and simplification of description rather than indicating or implying that the referenced device or element must have a particular orientation, be constructed and operate in a particular orientation, and thus are not to be construed as limiting the present application. In addition, the terms "first," "second," "third," and the like are used for descriptive purposes only and are not to be construed as indicating or implying relative importance.

In the field of new energy, a power battery may serve as a main power source of an electric device (e.g., vehicles, ships, or spacecrafts), and an energy storage battery may serve as a charge source of the electric device, and the importance of the power battery and the energy storage battery is self-evident. As an example rather than limitation, in some application scenes, the power battery may be a battery in the electric device, and the energy storage battery may be a battery in a charge device. For convenience of description, hereinafter, both the power battery and the energy storage battery may be collectively referred to as a battery.

At present, most batteries in the market are rechargeable storage batteries, and most commonly lithium batteries, such as lithium ion batteries, or lithium ion polymer batteries, and the like. In the charge process, a battery is generally charged in a continuous charge mode, and the continuous charge of the battery may cause lithium precipitation, heating and other phenomena of the battery, where the lithium precipitation, heating and other phenomena can not only reduce the performance of the battery and greatly shorten the cycle life, but also can limit the quick charge capacity of the battery, and possibly cause catastrophic consequences such as combustion and explosion, resulting in serious safety problems.

To guarantee the safety performance of the battery, the present application provides a new method for charging a battery and a charge system.

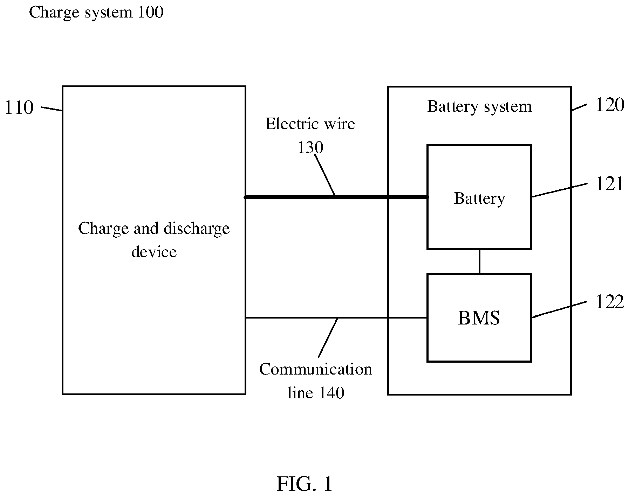

FIG.1 illustrates an architecture diagram of a charge system to which an embodiment of the present application is applicable.

As shown in FIG. 1, the charge system 100 may include: a charge and discharge device 110, and a battery system 120. Alternatively, the battery system 120 may be a battery system in an electric vehicle (including a battery electric vehicle or a plug-in hybrid electric vehicle) or a battery system in other application scene.

Alternatively, at least one battery pack (battery pack) may be arranged in the battery system 120, and the entirety of at least one battery pack may be collectively referred to as battery 121. From the type of the battery, the battery 121 may be any type of batteries, which includes but is not limited to: lithium-ion batteries, lithium metal batteries, lithium-sulfur batteries, lead-acid batteries, nickel-cadmium batteries, nickel-hydrogen batteries, or lithium air batteries. From the size of the battery, the battery 121 in the embodiments of the present application may be a cell/battery cell (cell), or may also be a battery module or a battery pack; the battery module or the battery pack may be formed by connecting a plurality of batteries in parallel or in series. In the embodiments of the present application, the specific type and size of the battery 121 are not limited.

In addition, to intelligently manage and maintain the battery 121, prevent the battery from over charge and over discharge, and prolong the service life of the battery, a battery management system (battery management system, BMS) 122 is also generally provided in the battery system 120 for monitoring a state of the battery 121. Alternatively, the BMS 122 and the battery 121 may be integrally arranged in the same apparatus/device, or, the BMS 122 may also be arranged outside the batter 121 as an independent apparatus/device.

Specifically, the charge and discharge device 110 is a device for supplementing electric energy for the battery 121 in a battery system 120 and/or for controlling the battery 121 to discharge.

Alternatively, the charge and discharge device 110 in the embodiments of the present application may be a normal charge pile, a super charge pipe, a charge pile supporting a vehicle to grid (vehicle to grid, V2G) mode, or a charge and discharge device/apparatus capable of charging and/or discharging the battery. The embodiments of the present application have no limitation on the specific type and specific application scene of the charge and discharge device 110.

Alternatively, as shown in FIG. 1, the charge and discharge device 110 may be connected to the battery 121 through an electric wire 130, and connected to the BMS 122 through a communication line 140, where the communication line 140 is used for achieving information interaction between the charge and discharge device 110 and the BMS.

As an example, the communication line 140 includes but is not limited to a control area network (control area network, CAN) communication bus or a daisy chain (daisy chain) communication bus.

Alternatively, the charge and discharge device 110 may also communicate with the BMS 122 through a wireless network in addition to communicating with the BMS 122 through the communication line 140. The embodiments of the present application have not specific limitation on the type of wired communication or the type of wireless communication between the charge and discharge device and the BMS 122.

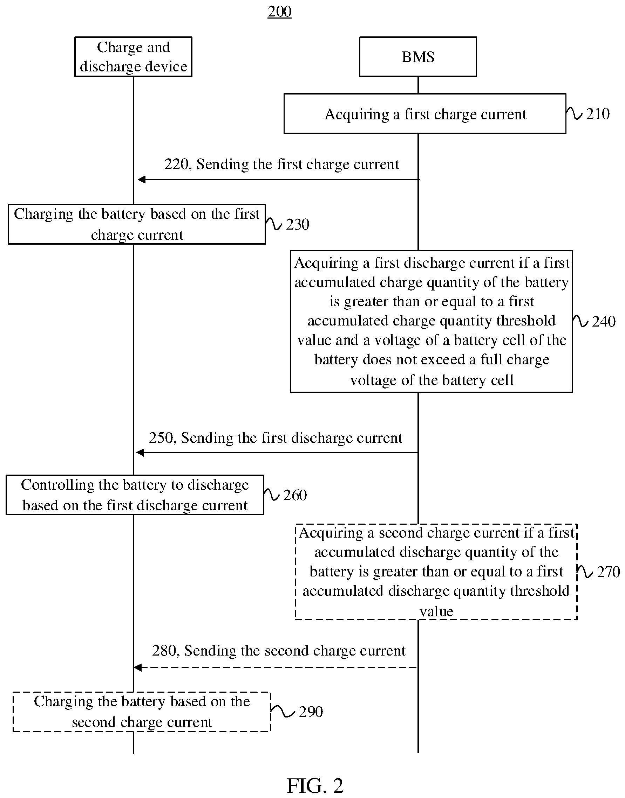

FIG. 2 illustrates a schematic flow block diagram of a method 200 for charging a battery in accordance with an embodiment of the present application. Alternatively, the method 200 provided by the embodiments of the present application may be applicable to the charge and discharge device 110 and the battery system 120 shown in FIG. 1.

As shown in FIG. 2, the method 200 for charging the battery may include the following steps.

Step 210: acquiring a first charge current by a battery management system (BMS).

Step 220: sending the first charge current to the charge and discharge device by the BMS.

Step 230: charging the battery based on the first charge current by the charge and discharge device.

Step 240: acquiring a first discharge current by the BMS if a first accumulated charge quantity of the battery is greater than or equal to a first accumulated charge quantity threshold value and a voltage of a battery cell of the battery does not exceed a full charge voltage of the battery cell.

Step 250: sending the first discharge current to the charge and discharge device by the BMS.

Step 260: controlling the battery to discharge based on the first discharge current by the charge and discharge device.

In the embodiments of the present application, a charging method capable of being achieved between the charge and discharge device and the BMS is provided. In the process of charging the battery, the charge and discharge device may achieve charge and discharge of the battery based on the first charge current and the first discharge current sent by the BMS, continuous charge of the battery is avoided, and therefore the problems of heating, lithium ion aggregation and the like caused by continuous charge of the battery are avoided. As the temperature of the battery rises due to heating, crystals generated by lithium ion aggregation may puncture the battery and cause electrolyte leakage to cause short circuit of the battery, and the temperature rise of the battery, the short circuit of the battery and the like may cause safety problems of the battery, such as battery combustion or explosion. Therefore, with the technical solutions of the embodiments of the present application, the charge and discharge device achieves charge and discharge of the battery based on the first charge current and the first discharge current sent by the BMS, thus guaranteeing the safety performance of the battery. In addition, in the process of continuous charge, continuous aggregation of the lithium ions may cause the problem of lithium precipitation, which affects the service life and the charging capacity of the battery; therefore, with the technical solutions of the embodiments of the present application, the service life and the charging capacity of the battery may be guaranteed.

Specifically, in the step 210 to step 230, the BMS may firstly enter a charge mode to control the charge and discharge device to charge the battery. At first, the BMS acquires a first charge current, and the charge and discharge device charges the battery based on the received first charge current after the BMS sends the first charge current to the charge and discharge device.

Alternatively, the BMS may acquire the first charge current from the own function unit (for example, a storage unit or a processing unit), or, the BMS may acquire the first charge current from other devices. In some embodiments, the first charge current may be a preset current which may be a fixed value, or may be changed with time according to a preset way. Or, in some other embodiments, the first charge current may be a current determined according to a state parameter of the battery, the first charge current may be changed as the state parameter of the battery change.

Alternatively, the charge and discharge device may be connected to a power source, the power source may be an alternating current (AC) power source and/or a direct current (DC) power source, the charge and discharge device charges the battery through the AC power source and/or the DC power source based on the first charge current after receiving information of the first charge current.

Further, in the process that the charge and discharge device charges the battery based on the first charge current, the BMS may acquire a first accumulated charge quantity of the battery and judges whether the first accumulated charge quantity is greater than or equal to a first accumulated charge quantity threshold value or not. If the first accumulated charge quantity is greater than or equal to the first accumulated charge quantity threshold value and a voltage of a battery cell of the battery does not exceed a full charge voltage of the battery cell, the BMS acquires the first discharge current.

Specifically, knowing from the description about the battery in FIG. 1, the battery may include one or more battery cells, the BMS may monitor whether the battery has reached a fully charged state by monitoring a voltage of one or more battery cells in the battery. Alternatively, if the battery includes a plurality of battery cells, voltages of the plurality of battery cells may be different, under this circumstance, whether the battery has reached the fully charged state or not may be judged by judging whether the maximum voltage of the battery cell exceeds the full charge voltage of the battery cell. Or, in other modes, in addition to the maximum voltage of the battery cell, other voltages of the battery cell in the battery may be utilized to judge whether the battery has reached the fully charged state.

On the premise that the voltage of the battery cell of the battery does not exceed the full charge voltage of the battery cell, i.e., the battery does not reach the fully charged state, if the first accumulated charge quantity of the battery is greater than or equal to a first accumulated charge quantity threshold value, the BMS acquires a first discharge current, i.e., the battery is switched to a discharge mode from a charge mode.

Alternatively, the above first accumulated charge quantity may be a first accumulated charge capacity or may be a first accumulated charge electric quantity. Correspondingly, if the first accumulated charge quantity is the first accumulated charge capacity, the first accumulated charge quantity threshold value is a first accumulated charge capacity threshold value; if the first accumulated charge quantity is the first accumulated charge electric quantity, the first accumulated charge quantity threshold value is the first accumulated charge electric quantity threshold value.

In some embodiments, the first accumulated charge quantity threshold value may be a preset threshold value, the preset threshold value may be a fixed threshold value, or may be changed with time according to the preset way.

In some other embodiments, the first accumulated charge quantity threshold value may also be determined according to a state parameter of the battery, i.e., as the state parameter of the battery changes, the first accumulated charge quantity threshold value may also be changed accordingly. With the embodiment, the first accumulated charge quantity threshold value may be better adapted to the current state parameter of the battery, thus better controlling the current charge process, and improving the charge efficiency of the battery without damaging and effecting the battery.

Further, in the step 240 to step 260, the BMS acquires a first discharge current, and sends the first discharge current to the charge and discharge device, and the charge and discharge device controls the battery to discharge based on the received first discharge current.

Alternatively, the BMS may acquire the first discharge current from the own function unit (for example, a storage unit or a processing unit), or the BMS may acquire the first discharge current from other devices. In some embodiments, the first discharge current may be a preset current, the preset current may be a fixed value, or may be changed according to a preset way with the time. Or, in some other embodiments, the first discharge current may be a current determined according to the state parameter of the battery, and the first discharge current may be changed as the state parameter of the battery change. In some embodiments, in the discharge mode or discharge stage, the electricity of the battery may be transmitted to an energy storage device and/or a power grid, thus facilitating the cyclic utilization of the electric energy. The energy storage device may be arranged in the charge and discharge device or may be arranged out of the charge and discharge device, and is intended to make the energy storage device receive the discharge current of the battery. The embodiments of the present application have no limitation on the specific providing of the energy storage device. Alternatively, in the discharge mode, the electric quantity of the battery may be consumed in other ways. The embodiments of the present application have no limitation on the specific way of consuming the electric energy.

Further, in the process that the charge and discharge device controls the discharge of the battery, the BMS may acquire a first accumulated discharge quantity of the battery in the discharge process, and judge whether the first accumulated discharge quantity is greater than or equal to a first accumulated discharge quantity threshold value.

Alternatively, the above first accumulated discharge quantity may be a first accumulated discharge capacity or may be a first accumulated discharge electric quantity. Correspondingly, if the first accumulated discharge quantity is the first accumulated discharge capacity, the first accumulated discharge quantity threshold value is a first accumulated discharge capacity threshold value, and if the first accumulated discharge quantity is the first accumulated discharge electric quantity, the first accumulated discharge quantity threshold value is the first accumulated discharge electric quantity threshold value.

In some embodiments, the first accumulated discharge quantity threshold value may be a preset threshold value, the preset threshold value may be a fixed threshold value, or may be changed with time according to a preset way.

In some other embodiments, the first accumulated discharge quantity threshold may be determined according to the state parameter of the battery, i.e., as the state parameter of the battery changes, the first accumulated discharge quantity threshold value is changed accordingly. Through the embodiments, the first accumulated discharge quantity threshold value may be better adapted to the current state parameter of the battery, thus better controlling the current discharge process and improving the discharge efficiency of the battery without damaging the battery.

When the first accumulated discharge quantity is greater than or equal to the first accumulated discharge quantity threshold value, the charge and discharge device controls the battery to stop discharging.

With above processes, the charge and the discharge of the battery are achieved by the charge and discharge device based on the first charge current and the first discharge current sent by the BMS, thus avoiding the problems of heating, lithium ion aggregation, and the like of the battery caused by continuous charge, and then avoiding the safety problems, such as battery combustion or explosion, of the battery caused by the problems of heating, lithium ion aggregation and the like, and the safety performance of the battery is guaranteed. In addition, after the battery is charged to a first accumulated charge quantity based on the first charge current and then the electric quantity of battery is released to a first accumulated discharge quantity based on the first discharge current, lithium ions gathered at a negative electrode of the battery in charge process may be released, and problem of lithium precipitation generated in continuous charge is prevented, thus prolonging the service life of the battery and improving the charge capacity of the battery.

For the charge of the battery, after one charge and one discharge, the battery may continue to be charged for a second time to continue to charge the battery.

Alternatively, as shown in FIG. 2, the method 200 for charging the battery in the embodiments of the present application further includes the following steps.

Step 270: acquiring a second charge current by the BMS if the first accumulated discharge quantity of the battery is greater than or equal to the first accumulated discharge quantity threshold value.

Step 280: sending the second charge current to the charge and discharge device by the BMS.

Step 290: charging the battery based on the second charge current by the charge and discharge device.

Specifically, in the step 270 to step 290, when the BMS judges that the first accumulated discharge quantity of the battery is greater than or equal to the first accumulated discharge quantity threshold value, the BMS acquires the second charge current, and sends the second charge current to the charge and discharge device. The charge and discharge device continues to charge the battery based on the received second charge current, i.e., for the battery, the battery reenters the charge mode from the discharge mode. Alternatively, other related technical solutions of the step 270 to step 290 may refer to above related description of the step 210 to step 230 and will not be described in detail here.

It may be understood that in the embodiments of the present application, the charge and the discharge of the battery require voltage information required by the charge and the discharge in addition to the current information required by the charge and the discharge. For example, in the step 210 to step 230: acquiring, by the BMS, the first charge current and a first charge voltage and sending the first charge current and the first discharge current to the charge and discharge device, where the charge and discharge device is configured to charge the battery based on the first charge current and the first charge voltage; in the step 240 to step 260, acquiring, by the BMS, the first discharge current and a first discharge voltage and sending the first discharge current and the first discharge voltage to the charge and discharge device, where the charge and discharge device is configured to discharge the battery based on the first discharge current and the first discharge voltage. The subsequent charge and discharge process may be similar to the above charge and discharge process and will not be described in detail.

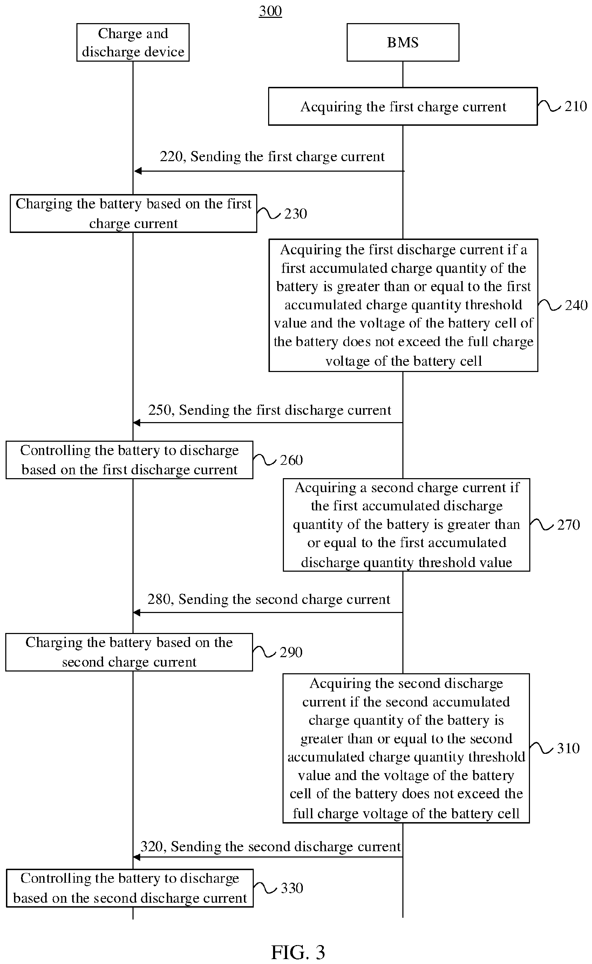

FIG. 3 illustrates a schematic flow block diagram of another method 300 for charging a battery in accordance with an embodiment of the present application.

As shown in FIG. 3, except the above step 210 to step 290, the method 300 for charging the battery further includes the following steps.

Step 310: acquiring the second discharge current by the BMS if a second accumulated discharge quantity of the battery is greater than or equal to a second accumulated charge quantity threshold value and a voltage of a battery cell of the battery does not exceed a full charge voltage of the battery cell.

Step 320: sending the second discharge current to the charge and discharge device by the BMS.

Step 330: controlling the battery to discharge based on the second discharge current by the charge and discharge device.

In the embodiments of the present application, the charge, discharge, recharge, and re-discharge of the battery are completed through information interaction between the BMS and the charge and discharge device. According to this way, the embodiments of the present application may further provide a multi-cycle charge and discharge method, the charge and discharge processes are sequentially and cyclically carried out to gradually charge the battery on the basis of ensuring the safety performance of the battery.

Specifically, in the step 310, when the charge and discharge device is in the process of charging the battery based on the second charge current, the BMS may acquire a second accumulated charge quantity of the battery, and may judge whether the second accumulated charge quantity is greater than or equal to the second accumulated charge quantity threshold value.

Alternatively, the second accumulated charge quantity may only be a charge quantity to the battery by the charge and discharge device based on the second charge current, or, the second accumulated charge quantity may also be a current total charge quantity of the battery. As an example, the current total charge quantity of the battery = the charge quantity based on the first charge current + the charge quantity based on the second charge current - the discharge quantity based on the first discharge current. Correspondingly, the second accumulated charge quantity threshold value may also be a charge quantity threshold value based on single charge, or the second accumulated charge quantity threshold value may also be a charge quantity threshold value based on the total charge quantity.

Similar to the first accumulated charge quantity and the first accumulated charge quantity threshold value descried above, in the embodiments of the present application, the second accumulated charge quantity may be a second accumulated charge capacity or may also be a second accumulated charge electric quantity. Correspondingly, if the second accumulated charge quantity is the second accumulated charge capacity, the first accumulated charge quantity threshold value is the second accumulated charge capacity threshold value; if the second accumulated charge quantity is the second accumulated charge electric quantity, the second accumulated charge quantity threshold value is the second accumulated charge electric quantity threshold value.

Alternatively, in some embodiments, the second accumulated charge quantity threshold value may be a preset threshold value. The preset threshold value may be a fixed threshold value, or may be changed with time according to the preset way.

In some other embodiments, the second accumulated charge quantity threshold value may also be determined according to a state parameter of the battery, i.e., when the state parameter of the battery changes, the second accumulated charge quantity threshold value is changed accordingly.

Further, in the step 310, when the second accumulated charge quantity is greater than or equal to the second accumulated charge quantity threshold value, and the voltage of the battery cell of the battery does not exceed the full charge voltage of the battery cell, the BMS acquires the second discharge current. In the step 320 to step 330, the BMS sends the second discharge current to the charge and discharge device, and the charge and discharge device controls the battery to discharge based on the received second discharge current.

Specifically, other related technical solutions in the above steps may refer to the related description in the step 240 to step 260, and will not be described in detail here.

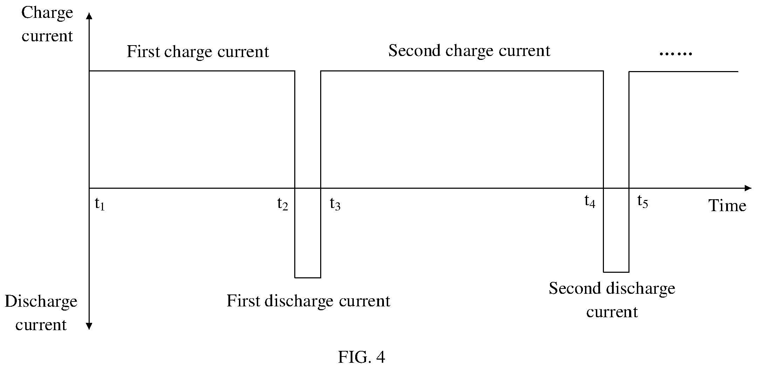

As an example, the FIG.4 illustrates a schematic oscillogram of a charge current and a discharge current of a battery in accordance with an embodiment of the present application.

As shown in FIG. 4, from the time period t1 to t2, the charge and discharge device charges the battery based on the first charge current until the first accumulated charge quantity of the battery is greater than or equal to the first accumulated charge quantity threshold value and the voltage of the battery cell of the battery does not exceed the full charge voltage of the battery cell. From the time period t2 to t3, the charge and discharge device controls the battery to discharge based on the first discharge current until the first accumulated discharge quantity of the battery is greater than or equal to the first accumulated discharge quantity threshold value. Alternatively, the duration of the first discharge current may be less than the duration of the first charge current. From the time period t3 to t4, the charge and discharge device continues to charge the battery based on the second charge current until the second accumulated charge quantity of the battery is greater than or equal to the second accumulated charge quantity threshold value and the voltage of the battery cell of the battery does not exceed the full charge voltage of the battery cell. From the time period t4 to t5, the charge and discharge device controls the battery to discharge based on the second discharge current until the second accumulated discharge quantity of the battery is greater than or equal to the second accumulated discharge quantity threshold value. Alternatively, the duration of the second charge current may be less than the duration of the first charge current. It may be understood that the charge and discharge processes are continued until the battery is fully charged.

It should be noted that FIG. 4 only schematically illustrates oscillogram of a first charge current, a second charge current, a first discharge current, and a second discharge current. The first charge current may be a constant current shown in FIG. 4 from t1 to t2, or may also be a variable current changed with time. Similarly, the second charge current, the first discharge current and the second discharge current may be the constant current shown in FIG. 4, or may also be the variable current changed with time. Furthermore, the first charge current and the second charge current schematically shown in FIG. 4 are same in magnitude, and the first discharge current and the second discharge current are same in magnitude; in addition to this, the first charge current and the second charge current may also be different in magnitude, the first discharge current and the second discharge current may also be different in magnitude, and the embodiments of the present application have no specific limitation on this.

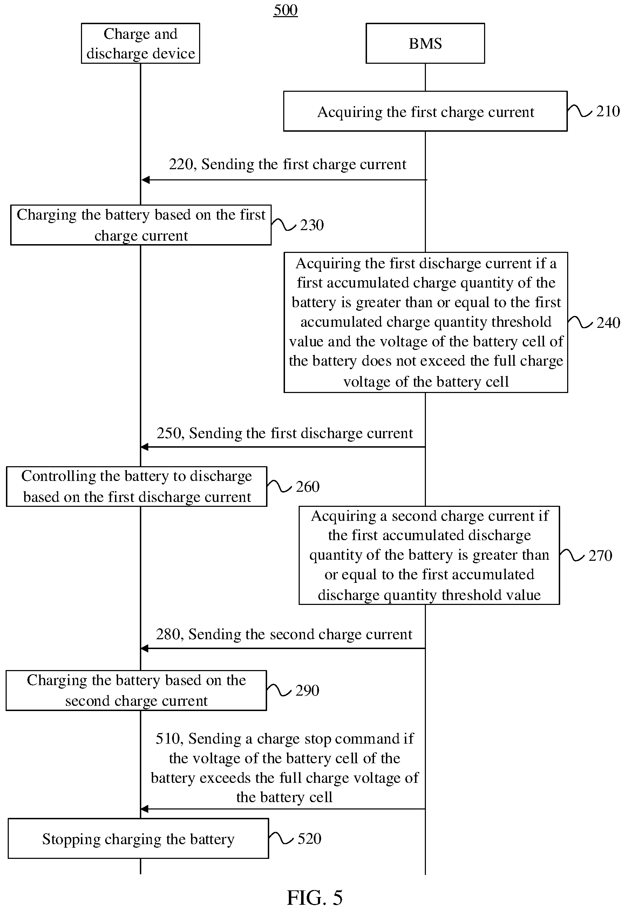

FIG. 5 illustrates a schematic flow block diagram of another method 500 for charging a battery in accordance with an embodiment of the present application.

As shown in FIG. 5, except the above step 210 to step 290, the method 500 for charging the battery further includes the following steps.

Step 510: sending a charge stop command to the charge and discharge device by the BMS if the voltage of the battery cell of the battery exceeds the full charge voltage of the battery cell.

Step 520, stopping charging the battery by the charge and discharge device.

Specifically, as described above, the BMS may monitor whether a battery has reached a fully charged state by monitoring the voltage of one or more battery cells in the battery. Alternatively, in some embodiments, whether the battery has reached the fully charged state may be judged by judging whether the maximum voltage of the battery cell exceeds the full charge voltage of the battery cell. When the maximum voltage of the battery cell exceeds the full charge voltage of the battery cell, the battery has reached the fully charged state, and the BMS sends the charge stop command to the charge and discharge device at the moment, where the charge stop command is used for instructing the charge and discharge device to stop charging the battery, thus making the charge and discharge device stop charging the battery.

Alternatively, the step 510 and the step 520 may be performed at the charge stage of the battery, in other words, after the BMS enters a charge mode and the charge and discharge receives the charge current sent by the BMS, in the process of charging the battery, the BMS may acquire the voltage of the battery cell of the battery to judge whether the battery has reached the fully charged state. Once the voltage of the battery cell of the battery exceeds the full charge voltage of the battery cell, the BMS sends the charge stop command to the charge and discharge device to make the charge and discharge device stop charging the battery.

Therefore, FIG. 5 only schematically illustrates that the step 510 and step 520 are performed after the step 290, i.e. performed in the process of the second charge. It may be understood that the step 510 and step 520 may also be performed during any one of the plurality of charge and discharge.

Alternatively, in the embodiments of above method, due to the fact that the charge and discharge device is configured to charge, discharging and recharging the battery, the safety problem of the battery caused by continuous charge may be prevented. Further, the charge current in the method may be a high current to improve the charge quantity of the battery in the single charge process, thus achieving the purpose of quick charge.

Moreover, due to limitation that lithium ions are gathered at a negative electrode in the continuous charge process, the charge current is also limited, and thus quick charge of the battery cannot be achieved by using continuous high current. However, in accordance with the technical solution of the embodiments of the present application, the battery is charged by using the high current, and the battery is discharged after one-time high-current charging to release the lithium ions gathered at the negative electrode of the battery in the charging process, and then the battery can be subsequently charged by utilizing the high current again, thus achieving quick charge of the battery.

Specifically, in the above method, the first charge current and/or the second charge current may be a high current; in addition, after the charge and discharge device charges the battery based on the second charge current, the charge current in the subsequent charge process may also be the high current.

Alternatively, to achieve quick charge of the high current, a charge rate of the first charge current and/or the second charge current ranges from 2C to 10C.

Further, the discharge current in the embodiments of the present application may be low current, which aims at releasing lithium ions gathered at the negative electrode of the battery through low-current discharge of the battery without causing excessive loss of charged electric quantity in the battery.

Specifically, the first discharge current and/or the second discharge current may be a low current; in addition, after the charge and discharge device discharges the battery based on the second discharge current, the discharge current in the subsequent discharge process may also be the low current.

Alternatively, to achieve low-current discharge, a charge rate of the first discharge current and/or the second discharge current ranges from 0.1C to 1C.

Alternatively, in the above method, to control the charge quantity of the battery in the charge process and the discharge quantity of the battery in the discharge process battery, a ratio of an accumulated discharge quantity threshold value in the discharge process to an accumulated charge threshold value in the charge process may be provided to make the discharge quantity be less, without causing excessive loss of charged electric quantity in the battery.

As an example, in the above method, a ratio of the first accumulated discharge quantity threshold value to the first accumulated charge threshold value is less than or equal to 10%, and/or, a ratio of the second accumulated discharge quantity threshold value to the second accumulated charge threshold value is less than or equal to 10%.

In addition to this, after the charge and discharge device charges the battery and controls the battery to discharge respectively based on the second charge current and the second discharge current, a ratio of an accumulated discharge quantity threshold value to an accumulated charge quantity threshold value in the subsequent charge and discharge process may also be less than or equal to 10%.

It should be noted that, the ratio of 10% may also be adjusted with the change of the application scene and the application demand, and the present application has no limitation on the specific value of the ratio.

Alternatively, in the embodiments of the above method, the first charge current and the second charge current acquired by the BMS may be same or different. The first charge current and/or the second charge current may be a preset current, or, the first charge current and/or the second charge current may also be a current determined according to a state parameter of the battery; when the state parameter of the battery changes, the first charge current and/or the second charge current may be different currents corresponding to different state parameters. Where the state parameter of the battery includes at least one of the following parameters: a battery temperature, a battery voltage, a battery current, a state of charge (state of charge, SOC) of the battery, a state of health (state of health, SOH) of the battery and the like.

Similar, the first discharge current and the second discharge current acquired by the BMS may be same or different. The first discharge current and/or the second discharge current may be a preset current, or, the first discharge current and/or the second discharge current may also be a current determined according to the state parameter of the battery.

If at least one of the first charge current, the second charge current, the first discharge current and the second discharge current is the current determined according to the state parameter of the battery, the current may be better adapted to the current state parameter of the battery to improve the charge efficiency and/or discharge efficiency of the battery without damaging the battery.

In addition to this, after the charge and discharge device charges the battery and controls the battery to discharge based on the second charge current and the second discharge current, the charge current and/or the discharge current in the subsequent charge and discharge process may also be the preset current, or may also be the current determined according to the state parameter of the battery.

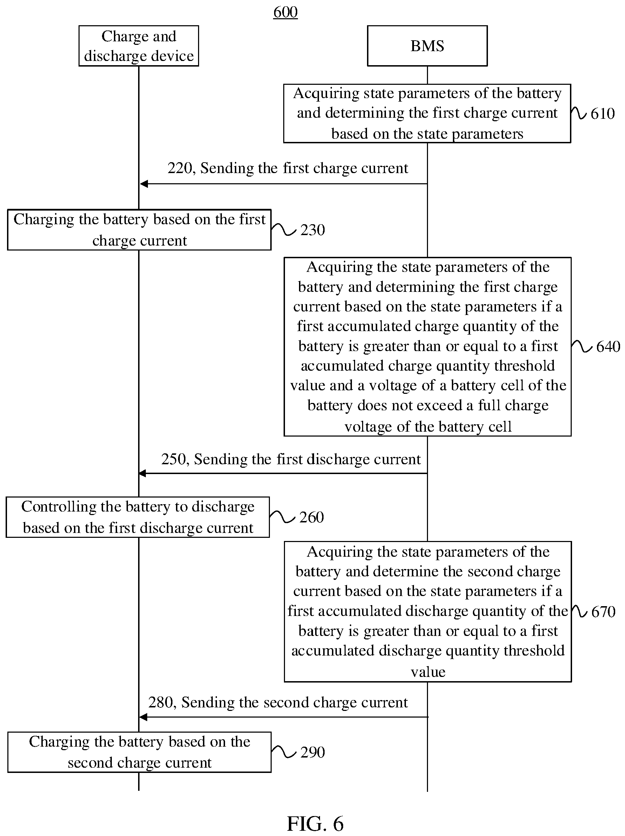

FIG. 6 illustrates a schematic flow block diagram of another method 600 for charging a battery in accordance with an embodiment of the present application.

Based on the method 200 shown in FIG. 2, as shown in FIG. 6, the above step 210 may include:
step 610: acquiring the state parameter of the battery by the BMS, and determining the first charge current according to the state parameter.

The above step 240 may include:
step 640: acquiring the state parameter of the battery by the BMS, and determining the first discharge current according to the state parameter if the first accumulated charge quantity of the battery is greater than or equal to the first accumulated charge quantity threshold value and the voltage of the battery cell of the battery does not exceed the full charge voltage of the battery cell.

The above step 270 may include:
step 670: acquiring the state parameter of the battery by the BMS, and determining the second charge current according to the state parameter if the first accumulated discharge quantity of the battery is greater than or equal to the first accumulated discharge quantity threshold value.

In addition to this, other steps of the method 600 in the embodiments of the present application may refer to the related description of the embodiments shown in FIG. 2, and will not be described in detail here.

Specifically, in the embodiments of the present application, the first charge current, the first discharge current and the second charge current are all current determined according to the state parameter of the battery. In different time periods, the BMS may acquire different state parameters of the battery, and may determine the current charge current and discharge current according to the state parameters.

Alternatively, the determination of the charge current and the discharge current according to the state parameter of the battery may be achieved in various ways. As one example, a mapping relation between the state parameter of the battery and the charge current and the discharge current may be obtained, and the specific charge current and the specific discharge current are determined through the state parameter of the battery according to the mapping relation. Where the mapping relation may be a mapping relation obtained through fitting of a large amount of experimental data, with high credibility and accuracy; and specifically, the mapping relation may be a mapping table, a mapping graph or a mapping formula and the like. In addition, in other examples, a dedicated neural network model may be trained according to a large amount of experimental data, and the neural network model may output the charge current and the discharge current according to input state parameter of the battery.

Alternatively, in addition to the charge current and the discharge current, in the embodiments of the above method, the first accumulated charge quantity threshold value and the second accumulated charge quantity threshold value may be same or different. The first accumulated discharge quantity threshold value and the second accumulated discharge quantity threshold value may be same or different. At least one of the first accumulated charge quantity threshold value, the second accumulated charge quantity threshold value, the first accumulated discharge quantity threshold value and the second accumulated discharge quantity threshold value may be a preset threshold value. Or, at least one of the first accumulated charge quantity threshold value, the second accumulated charge quantity threshold value, the first accumulated discharge quantity threshold value and the second accumulated discharge quantity threshold value may also be a threshold value determined according to the state parameter of the battery.

In addition to this, after the charge and discharge device charges the battery and controls the battery to discharge based on the second charge current and the second discharge current, the accumulated discharge quantity threshold value and the accumulated charge quantity threshold value in the subsequent charge and discharge process may be a preset threshold value, or may also be the threshold value according to the state parameter of the battery.

Through the embodiments of the present application, if at least one of the first accumulated charge quantity threshold value, the second accumulated charge quantity threshold value, the first accumulated discharge quantity threshold value and the second accumulated discharge quantity threshold value is a threshold value determined according to the state parameter of the battery, the threshold value may be adapted to the current state parameters of the battery better to control the current charge process and/or discharge process, the charge quantity and the discharge quantity are guaranteed, and the efficient charge of the battery is achieved.

Alternatively, in the embodiments of the above method, at least one of the first charge current, the second charge current, the first discharge current and the second discharge current may be a current acquired by the BMS regularly or irregularly. As an example, at least one of the first charge current, the second charge current, the first discharge current and the second discharge current may be the current determined by the BMS regularly or irregularly according to the state parameters of the battery, and the current is changed with the change of the state parameter of the battery. Specifically, the BMS may acquire the state parameters of the battery regularly to determine at least one of the first charge current, the second charge current, the first discharge current and the second discharge current. Or the BMS acquires the state parameters of the battery in real time; when the state parameter changes irregularly, the BMS determines at least one of the first charge current, the second charge current, the first discharge current and the second discharge current according to the irregularly changed state parameters.

Further, on this basis, the BMS sends at least one of the first charge current, the second charge current, the first discharge current and the second discharge current to the charge and discharge device regularly or irregularly, thus making the charge and discharge device charge the battery or control the battery to discharge based on the regularly sent current.

In the implementation mode, in the process that the charge and discharge device performs single charge and/or single discharge on the battery, the charge current and/or the discharge current are sent by the BMS regularly or irregularly. On the one hand, the charge current and/or discharge current may be adjusted regularly or irregularly through the implementation mode to improve the charge and discharge efficiency, and on the other hand, the charge current and/or the discharge current sent regularly or irregularly indicate that the states of the BMS and the battery are normal, and the charge and discharge device may continue to charge the battery or control the battery to discharge. Therefore, in the implementation mode, if the charge and discharge device does not receive the charge current and/or the discharge current sent by the BMS regularly or irregularly, the charge and discharge device may stop charging the battery and/or stop controlling the battery to discharge, thus guaranteeing the safety performance of the battery.

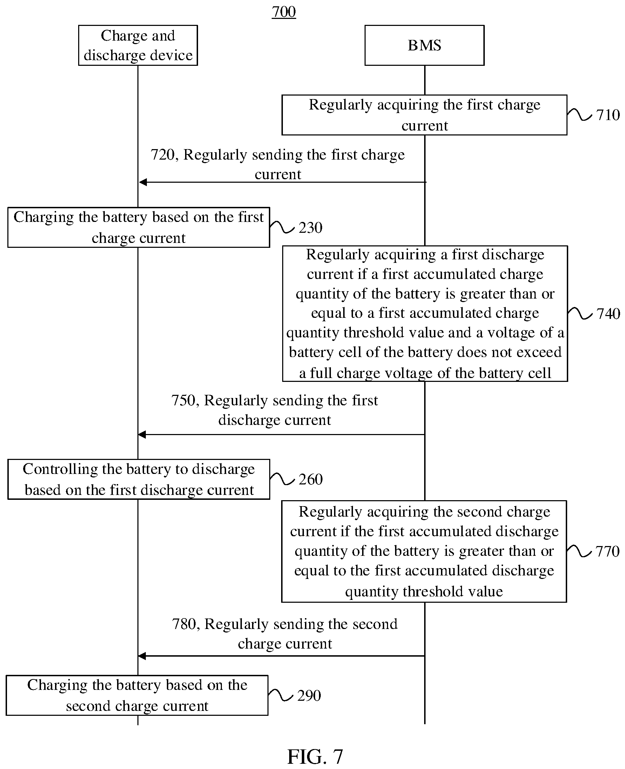

FIG. 7 illustrates a schematic flow block diagram of another method 700 for charging a battery in accordance with an embodiment of the present application.

Based on the method 200 show in FIG. 2, as shown in FIG. 7, the step 210 may include:
step 710: regularly acquiring the first charge current by the BMS.

The step 220 may include:
step 720: regularly sending the first charge current to the charge and discharge device by the BMS.

The step 240 may include:
step 740: regularly acquiring the first discharge current if a first accumulated charge quantity of the battery is greater than or equal to a first accumulated charge quantity threshold value and a voltage of a battery cell of the battery does not exceed a full charge voltage of the battery cell.

The step 250 may include:
step 750: regularly sending the first discharge current to the charge and discharge device by the BMS.

The step 270 may include:
Step 770: regularly acquiring the second charge current if a first accumulated discharge quantity of the battery is greater than or equal to a first accumulated discharge quantity threshold value.

The step 280 may include:
step 780: regularly sending the second charge current to the charge and discharge device by the BMS.

In addition to this, other steps of the method 700 in the embodiments of the present application may refer to the related description of the embodiments shown in FIG. 2, and will not be described in detail here.

In the embodiments of the present application, the BMS may regularly acquire the first charge current, the first discharge current, and the second charge current. Correspondingly, the BMS may regularly send the first charge current, the first discharge current and the second charge current to the charge and discharge device.

It should be understood that in the embodiments, the charge and discharge of the battery require voltage information required by charge and discharge in addition to the current information required by charge and discharge, and the acquisition way of the voltage required by charge and discharge has no any limitation on the embodiments of the present invention.

Alternatively, in the above embodiments of the method, the communication between the BMS and the charge and discharge device may be compatible with a communication protocol between an existing charger and the BMS, and thus the communication between the BMS and the charge and discharge device is convenient to achieve, and the good application prospect is provided.

Specifically, on the basis of the above embodiments of the method, the BMS may also acquire at least one of a first charge voltage, a second charge voltage, a first discharge voltage, and a second discharge voltage, and sends at least one of the first charge voltage, the second charge voltage, the first discharge voltage and the second discharge voltage to the charge and discharge device, where the first charge current and the first charge voltage are carried in a first battery charge lab (BCL) message, and/or, the first discharge current and the first discharge voltage are carried in a second BLC message, and/or, the second charge current and the second charge voltage are carried in a third BCL message, and/or, the second discharge current and the second discharge voltage are carried in a fourth BCL message.

In addition to this, after the charge and discharge device charges the battery and controls the battery to discharge based on the second charge current and the second discharge current, the charge current, the charge voltage, the discharge current and the discharge voltage in the subsequent charge and discharge process may also be carried in the BCL message and sent to the charge and discharge device by the BMS.

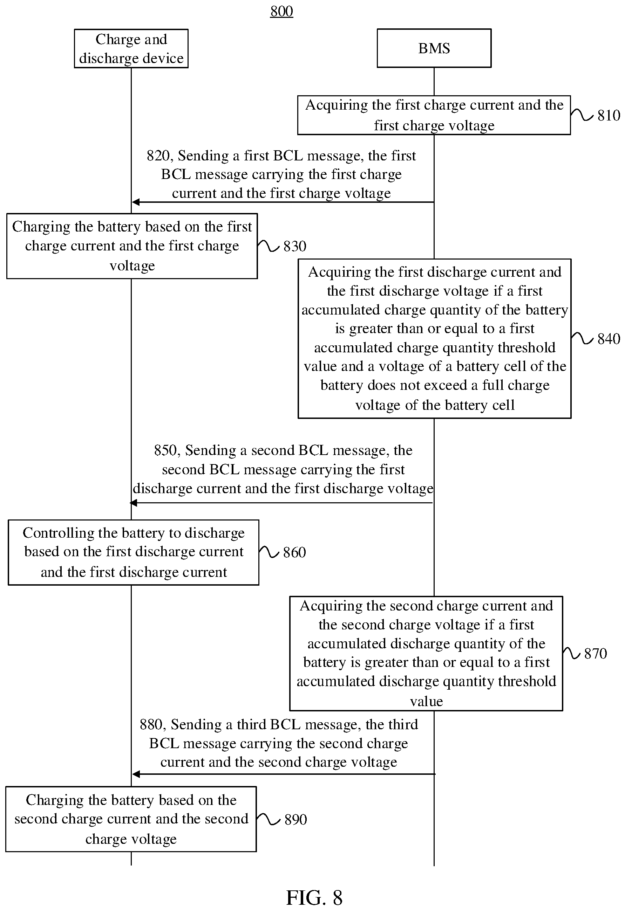

FIG. 8 illustrates a schematic flow block diagram of another method 800 for charging a battery in accordance with an embodiment of the present application.

As shown in FIG. 8, the method 800 for charging the battery may include the following steps.

Step 810: acquiring the first charge current and the first charge voltage by the BMS.

Step 820: sending the first BCL message to the charge and discharge device by the BMS, the first BCL message carrying the first charge current and the first charge voltage.

Step 830: charging the battery by the charge and discharge device based on the first charge current and the first charge voltage.

Step 840: acquiring the first discharge current and the first discharge voltage by the BMS if a first accumulated charge quantity of the battery is greater than or equal to a first accumulated charge quantity threshold value and a voltage of a battery cell of the battery does not exceed a full charge voltage of the battery cell.

Step 850: sending the second BCL message to the charge and discharge device by the BMS, the second BCL message carrying the first discharge current and the second discharge voltage.

Step 860: controlling the battery to discharge by the charge and discharge device based on the first discharge current and the second discharge voltage.

Step 870: acquiring the second charge current and the second charge voltage by the BMS if a first accumulated discharge quantity of the battery is greater than or equal to a first accumulated discharge quantity threshold value.

Step 880: sending the third BCL message to the charge and discharge device by the BMS, the third BCL message carrying the second charge current and the second charge voltage.

Step 890: charging the battery by the charge and discharge device based on the second charge current and the second charge voltage.

In the embodiments of the present application, by utilizing the battery charge lab (BCL) message in a communication protocol between an existing charger and the BMS, the BMS sends the charge current and the discharge current to the charge and discharge device, and the charge and discharge device charges the battery or controls the battery to discharge based on the received charge current and the discharge current.

Alternatively, in the BCL message, the charge voltage (including the first charge voltage and the second charge voltage) and the discharge voltage (including the first discharge voltage and the second discharge voltage) are different in range, and the charge current (including the first charge current and the second charge current) and the discharge current (including the first discharge current and the second discharge current) are different in range. In the BCL message received by the charge and discharge device, whether the voltage and current belong to the charge voltage and charge current or the discharge voltage and the discharge current may be judged through the magnitude of the voltage and the current carried in the BCL message.

Alternatively, the BMS may determine the charge voltage and the discharge voltage according to the state parameter of the battery, or the charge voltage and the discharge voltage may also be a preset value.

Alternatively, in some embodiments, the BMS may regularly acquire the charge current and the discharge current and regularly send a BCL message carrying the charge current and the charge voltage to the charge and discharge device. Similarly, the BMS may also regularly acquire the discharge current and the discharge voltage, and regularly send the BCL message carrying the discharge current and the discharge voltage to the charge and discharge device. In the embodiment, the regular sending way of the BCL message may be same as that of the BCL message in an existing standard.

In the above embodiment, an information interaction message of charge and discharge current and/or voltage is used as an example for explanation, and it may be understood that in order to achieve charge and discharge of the battery, in addition to processing at the charge and discharge stage, handshake interaction between a vehicle and a charger before charge and discharge, parameter configuration interaction of charge and discharge and the like may be included; the embodiments of the present invention have no specific limitation on this.

Alternatively, the communication protocol between the charger and the BMS includes a communication protocol under a vehicle to grid (vehicle to grid, V2G) mode and a grid to vehicle (grid to vehicle, G2V) mode.

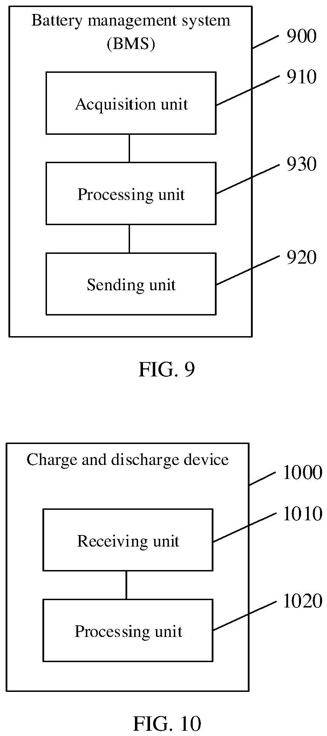

Specific embodiments of the method for charging the battery provided herein are described above in conjunction with FIG. 2 to FIG. 8, and specific embodiments of related devices provided herein are described below in conjunction with FIG. 9 to FIG. 12, it may be understood that the related descriptions in the following device embodiments may refer to the aforementioned method embodiments and are not described in detail for brevity.

FIG. 9 illustrates a schematic structure block diagram of a battery management system BMS 900 in accordance with one embodiment of the present application. As shown in FIG. 9, the BMS 900 includes an acquisition unit 910, a sending unit 920, and a processing unit 930.

In one embodiment of the present application, the acquisition unit 910 is configured to acquire a first charge current; a sending unit 920 is configured to send the first charge current to a charge and discharge device, thus making the charge and discharge device charge the battery based on the first charge current; the processing unit 930 is configured to determine that the acquisition unit 910 is further configured to acquire a first discharge current when a first accumulated charge quantity of the battery is greater than or equal to a first accumulated charge quantity threshold value and a voltage of a battery cell of the battery does not exceed a full charge voltage of the battery cell; the sending unit 920 is further configured to send the first discharge current to the charge and discharge device, thus making the charge and discharge device control the battery to discharge based on the first discharge current; alternatively, the processing unit 930 is further configured to determine that the acquisition unit 910 is further configured to acquire a second charge current when a first accumulated discharge quantity of the battery is greater than or equal to a first accumulated discharge quantity threshold value; and the sending unit 920 is further configured to send the second charge current to the charge and discharge device, thus making the charge and discharge device charge the battery based on the second charge current.

Alternatively, the processing unit 930 is further configured to determine that the acquisition unit 910 is further configured to acquire a second discharge current when a second accumulated charge quantity of the battery is greater than or equal to the second accumulated charge quantity threshold value and the voltage of the battery cell of the battery does not exceed the full charge voltage of the battery cell; the sending unit 920 is further configured to send the second discharge current to the charge and discharge device, thus making the charge and discharge device control the battery to discharge based on the second discharge current.

Alternatively, the processing unit 930 is further configured to determine that the voltage of the battery cell of the battery exceeds the full charge voltage of the battery cell, and the sending unit 920 is further configured to send a charge stop command to the charge and discharge device, the charge stop command being used for instructing the charge and discharge device to stop charging the battery.

Alternatively, a charge rate of the first charge current and/or the second charge current ranges from 2C to 10C.

Alternatively, a discharge rate of the first discharge current and/or the second discharge current ranges from 0.1C to 1C.

Alternatively, a ratio of the first accumulated discharge quantity threshold value to the first accumulated charge quantity threshold value is less than or equal to 10%, and/or, a ratio of the second accumulated discharge quantity threshold value to the second accumulated charge quantity threshold value is less than or equal to 10%.

Alternatively, the acquisition unit 910 is configured to acquire state parameters of the battery and determining the first charge current according to the state parameters; and/or, the acquisition unit 910 is configured to acquire the state parameters of the battery and determining the first discharge current according to the state parameters; and/or, the acquisition unit 910 is configured to acquire the state parameters of the battery and determining the first discharge current according to the state parameters; where the state parameters of the battery include at least one of the following parameters: a battery temperature, a battery voltage, a battery current, a state of charge of the battery, and a state of health of the battery.

Alternatively, the acquisition unit 910 is configured to acquire the first discharge current, the sending unit 920 is configured to regularly send the first discharge current to the charge and discharge device; and/or, the acquisition unit 910 is configured to regularly acquire the first discharge current, and the sending unit 920 is configured to regularly send the first discharge current to the charge and discharge device; and/or, the acquisition unit 910 is configured to regularly acquire the second charge current, and the sending unit 920 is configured to send the second charge current to the charge and discharge device.

Alternatively, the acquisition unit 910 is further configured to acquire the first charge voltage, the sending unit 920 is configured to send the first charge voltage to the charge and discharge device, where the first charge current and the first charge voltage are carried in a first battery charge lab (BCL) message; and/or, the acquisition unit 910 is further configured to acquire the first discharge voltage, the sending unit 920 is further configured to send the first discharge voltage to the charge and discharge device, where the first discharge current and the first discharge voltage are carried in a second BCL message; and/or, the sending unit 920 is further configured to acquire the second charge voltage, and the sending unit 920 is further configured to send the second charge voltage to the charge and discharge device, where the second charge current and the second charge voltage are carried in a third BCL message; and/or, the acquisition unit 910 is further configured to acquire the second discharge voltage, and the sending unit 920 is further configured to send the second discharge voltage to the charge and discharge device, where the second discharge current and the second discharge voltage are carried in a fourth BCL message.

FIG. 10 illustrates a schematic structure block diagram of a charge and discharge device 1000 of one embodiment of the present application. As shown in FIG. 10, the charge and discharge device 1000 includes a receiving unit 1010 and a processing unit 1020.

In one embodiment of the present application, the receiving unit 1010 is configured to receive a first charge current sent by a battery management system (BMS); a processing unit 1020 is configured to charge a battery based on the first charge current; the receiving unit 1010 is further configured to receive a first discharge current sent by the BMS, the processing unit 1020 is further configured to control the battery to discharge based on the first discharge current, where the first discharge current is a discharge current sent by the BMS when a first accumulated charge quantity of the battery is greater than or equal to a first accumulated charge quantity threshold value and a voltage of a battery cell of the battery does not exceed a full charge voltage of the battery cell; and the receiving unit 1010 is further configured to receive a second charge current sent by the BMS, and the processing unit 1020 is further configured to charge the battery based on the second charge current, where the second charge current is a charge current sent by the BMS when a first accumulated discharge quantity of the battery is greater than or equal to a first accumulated discharge quantity threshold value.

Alternatively, the receiving unit 1010 is further configured to receive a second discharge current sent by the BMS, the processing unit 1020 is further configured to control the battery to discharge based on the second discharge current, where the second discharge current is a discharge current sent by the BMS when a second accumulated discharge quantity of the battery is greater than or equal to a second accumulated discharge quantity threshold value and the voltage of the battery cell of the battery does not exceed the full charge voltage of the battery cell.

Alternatively, the receiving unit 1010 is further configured to receive a charge stop command sent by the BMS, the processing unit 1020 is configured to stop charging the battery, where the charge stop command is a command sent by the BMS when the voltage of the battery cell of the battery exceeds the full charge voltage of the battery cell.

Alternatively, a charge rate of the first charge current and/or the second charge current ranges from 2C to 10C.

Alternatively, a discharge rate of the first discharge current and/or the second discharge current ranges from 0.1C to 1C.

Alternatively, a ratio of the first accumulated discharge quantity threshold value to the first accumulated charge quantity threshold value is less than or equal to 10%, and/or, a ratio of the second accumulated discharge quantity threshold value to the second accumulated charge quantity threshold value is less than or equal to 10%.

Alternatively, at least one of the first charge current, the first discharge current and the second charge current is determined according to state parameters of the battery, where the state parameters of the battery include at least one of the following parameters: a battery temperature, a battery voltage, a battery current, a state of charge of the battery, and a state of health of the battery.

Alternatively, the receiving unit 1010 is further configured to regularly receive a first charge current sent by the BMS; and/or, the receiving unit 1010 is configured to regularly receive a first discharge current sent by the BMS; and/or, the receiving unit 1010 is configured to regularly receive a second charge current sent by the BMS.

Alternatively, the receiving unit 1010 is further configured to receive the first charge voltage sent by the BMS, where the first charge voltage and the first charge current are carried in a first battery charge lab (BCL) message; and/or, the receiving unit 1010 is further configured to receive the first discharge voltage sent by the BMS, where the first discharge voltage and the first discharge current are carried in a second BCL message; and/or, the receiving unit 1010 is further configured to receive the second charge voltage sent by the BMS, where the second charge voltage and the second charge current are carried in a third BCL message; and/or, the receiving unit 1010 is further configured to receive the second discharge voltage sent by the BMS, where the second discharge voltage and the second discharge current are carried in a fourth BCL message.

Embodiments of the method and the device for charging the battery based on information interaction between a charge and discharge device and a BMS are described above in connection with FIG. 2 to FIG. 10, and for the charge and discharge device, the battery may be charged and controlled to discharge through different hardware architecture.

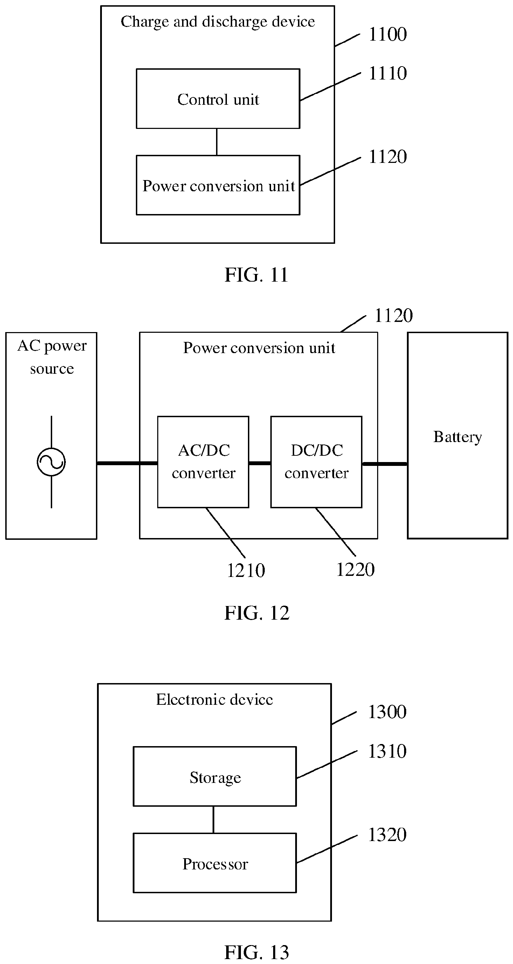

FIG. 11 illustrates a schematic structure block diagram of another charge and discharge device in accordance with an embodiment of the present application.

As shown in FIG. 11, the charge and discharge device 1100 may include a control unit 1110 and a power conversion unit 1120.

In one embodiment, the control unit 1110 is configured to receive a first charge current sent by a BMS and controlling the power conversion unit 1120 to charge the battery based on the first charge current; the control unit 1110 is further configured to receive a first discharge current sent by the BMS and controlling the power conversion unit 1120 based on the first discharge current, thus making the battery discharge , where the first discharge current is a discharge current sent by the BMS when a first accumulated charge quantity of the battery is greater than or equal to a first accumulated charge quantity threshold value and a voltage of a battery cell of the battery does not exceed a full charge voltage of the battery cell; the control unit 1110 is further configured to receive a second charge current sent by the BMS, and controlling the power conversion unit 1120 to charge the battery based on the second charge current, where the second charge current is a charge current sent by the BMS when a first accumulated discharge quantity of the battery is greater than or equal to a first accumulated discharge quantity threshold value.

Specifically, the power conversion unit 1120 may include a high-voltage component for achieving high-power electric energy conversion, and the control unit 1110 may include a low-voltage circuit for achieving a control function of the high-voltage component in the power conversion unit 1120. In addition to this, the control unit 1110 may also establish a communication connection with the BMS, for example, by way of example but not limitation, the control unit 1110 may establish a communication connection with the BMS via a communication bus, or the control unit 1110 may also establish a communication connection with the BMS via a wireless network.

Alternatively, as an example, FIG. 12 illustrates a schematic structure block diagram of a power conversion unit 1120 in accordance with an embodiment of the present application.

As shown in FIG. 12, the power conversion unit 1120 may be connected to an alternating current (alternating current, AC) power source and a battery, where the power conversion unit 1120 includes an alternating current/direct current (alternating current/direct current, AC/DC) converter 1210 and a direct current/direct current (direct current/direct current, DC/DC) converter 1220, a first end of the AC/DC converter 1210 is connected to the AC power source, a second end of the AC/DC converter 1210 is connected to a first end of the DC/DC converter 1220, and a second end of the DC/DC converter 1220 is connected to the battery, thus achieving current transfer between the battery and the AC power source.

In this case, the control unit 1110 may control the AC/DC converter 1210 and the DC/DC converter 1220 to charge the battery through the AC power source based on the first charge current, and the control unit 1110 may control the AC/DC converter 1210 and the DC/DC converter 1220 to charge the battery through the AC power source based on the second charge current.

In an embodiment, the AC/DC converter 1210 may be a bidirectional AC/DC converter, the DC/DC converter 1220 may be a bidirectional DC/DC converter; in this case, the control unit 1110 may control the bidirectional AC/DC converter 1210 and the bidirectional DC/DC converter 1220 to make the battery discharge electric quantity to the AC power source based on the first discharge current.

In another embodiment, the AC/DC converter 1210 may be a unidirectional AC/DC converter, the DC/DC converter 1220 may be a bidirectional DC/DC converter; in this case, the bidirectional DC/DC converter may be connected to an energy storage device, for example, may be connected to an energy storage battery; the control unit 1110 may control the bidirectional DC/DC converter 1220 to release the electric quantity of the battery to the energy storage battery based on the first discharge current.

Alternatively, the AC power source includes but is not limited to a power grid, which may be configured to provide a three-phase alternating current, the power grid may provide enough electric quantity to the battery for charging as well as receive a higher amount of electric quantity released by the battery.

Alternatively, in other embodiments, the AC power source may also be a single-phase AC power source. The embodiments of the present application have no limitation on the specific type of the AC power source.

It should be noted that in the embodiments of the present application, the power conversion unit 1120 may be connected to a DC power source in addition to an AC power source as shown in FIG. 12, where only a DC/DC converter may be included in the power conversion unit 1120 to enable current transfer between the battery and the DC power source.

Alternatively, if the power conversion unit 1120 is connected to the AC power source and the battery, the power conversion unit 1120 includes a bidirectional AC/DC converter and a bidirectional DC/DC converter; the control unit 1110 is further configured to receive a second discharge current sent by the BMS, and controls the bidirectional AC/DC converter and the bidirectional DC/DC converter based on the second discharge current, thus making the battery discharge electricity to the AC power source, where the second discharge current is a discharge current sent by the BMS when a second accumulated charge quantity of the battery is greater than or equal to the second accumulated charge quantity threshold value and the voltage of the battery cell of the battery does not exceed the full charge voltage of the battery cell.

Alternatively, the control unit 1110 is further configured to receive a charge stop command sent by the BMS and controlling the bidirectional AC/DC converter and the bidirectional DC/DC converter to stop charging the battery based on the charge stop command, where the charge stop command is a command sent by the BMS when the voltage of the battery cell of the battery exceeds the full charge voltage of the battery cell.

Alternatively, the control unit 1110 is configured to regularly receive the first charge current sent by the BMS, and/or, the control unit 1110 is configured to regularly receive the first discharge current sent by the BMS; and/or, the control unit 1110 is configured to regularly receive the second charge current sent by the BMS.

Alternatively, the control unit 1110 is further configured to receive the first charge voltage sent by the BMS, where the first charge voltage and the first charge current are carried in a first battery charge lab (BCL) message, and the control unit 1110 is configured to control the power conversion unit 1120 to charge the battery based on the first charge current and the first charge voltage; and/or, the control unit 1110 is further configured to receive the first discharge voltage sent by the BMS, where the first discharge voltage and the first discharge current are carried in a second BCL message, and the control unit 1110 is configured to control the power conversion unit 1120 based on the first discharge current and the first discharge voltage, thus making the battery discharge; and/or, the control unit 1110 is further configured to receive the second charge voltage sent by the BMS, where the second charge voltage and the second charge current are carried in a third BCL message, and the control unit 1110 is configured to control the power conversion unit 1120 to charge the battery based on the second charge current and the second charge voltage; and/or, the control unit 1110 is further configured to receive the second discharge voltage sent by the BMS, where the second discharge voltage and the second discharge current are carried in a fourth BCL message, and the control unit 1110 is configured to control the power conversion unit 1120 based on the second discharge current and the second discharge current, thus making the battery discharge.

In addition, in the embodiments of the present application, related technical solutions of the charge current, the discharge current, the accumulated charge quantity, the accumulated discharge quantity, the accumulated charge quantity threshold value, the accumulated discharge quantity threshold value and the like may be described in a related manner with reference to the foregoing, and will not be described in detail here.

FIG. 13 illustrates a schematic structure block diagram of an electronic device 1300 in accordance with one embodiment of the present application. As shown in FIG. 13, the electronic device 1300 includes a storage 1310 and a processor 1320, where the storage 1310 is configured to store a computer program, and the processor 1320 is configured to read the computer program and executing the methods of various embodiments of the present application based on the computer program.

Alternatively, the electronic device 1300 may be used for any one or more of the BMS and the charge and discharge device. In the embodiments of the present application, in addition to the fact that the processor in the charge and discharge device reads the corresponding computer program and executes the charging method corresponding to the charge and discharge device in the various embodiments based on the computer program, the processor in the BMS may also read the corresponding computer program and execute the charging method corresponding to the BMS in the various embodiments based on the computer program.

In addition, the embodiments of the present application further provide a readable storage medium for storing a computer program, where the computer program is configured to execute the method in the various embodiments of the present application. Alternatively, the computer program may be a computer program in the charge and discharge device and/or BMS.

It should be understood that the specific examples herein are intended merely to aid those skilled in the art in better understanding the embodiments of the present application and are not intended to limit the scope of the embodiments of the present application.

It further should be understood that in the various embodiments of the present application, the serial number of each process does not mean the sequence of execution, and the execution sequence of each process should be determined by the function and the internal logic, and should not limit the implementation process of the embodiments of the present application.

It is also to be understood that the various embodiments described in this specification may be implemented separately or in combination, to which the embodiments of the present application have no limitation.

While the present application has been described with reference to preferred embodiments, various modifications may be made thereto and equivalents may be substituted for components thereof without departing from the scope of the present application. In particular, the various technical features mentioned in various embodiments may be combined in any way as long as no structural conflict exists. The present application is not limited to the particular embodiments disclosed herein, but includes all technical solutions falling within the scope of the claims.

## Claims

1. A method for charging a battery, comprising:
acquiring, by a battery management system (BMS), a first charge current, and sending the first charge current to a charge and discharge device, thus making the charge and discharge device charge the battery based on the first charge current;
acquiring, by the BMS, a first discharge current, and sending the first discharge current to the charge and discharge device under a condition that a first accumulated charge quantity of the battery is greater than or equal to a first accumulated charge quantity threshold value and a voltage of a battery cell of the battery does not exceed a full charge voltage of the battery cell, thus making the charge and discharge device control the battery to discharge based on the first discharge current; and
acquiring, by the BMS, a second charge current, and sending the second charge current to the charge and discharge device under a condition that a first accumulated discharge quantity of the battery is greater than or equal to a first accumulated discharge quantity threshold value, thus making the charge and discharge device charge the battery based on the second charge current.

2. The method according to claim 1, wherein the method further comprises:
acquiring, by the BMS, a second discharge current and sending the second discharge current to the charge and discharge device under a condition that a second accumulated charge quantity of the battery is greater than or equal to a second accumulated charge quantity threshold value and the voltage of the battery cell of the battery does not exceed the full charge voltage of the battery cell, thus making the charge and discharge device control the battery to discharge based on the second discharge current.

3. The method according to claim 1 or 2, wherein the method further comprises:
sending, by the BMS, a charge stop command to the charge and discharge device under a condition that the voltage of the battery cell of the battery exceeds the full charge voltage of the battery cell, wherein the charge stop command is used for instructing the charge and discharge to stop charging the battery.

4. The method according to any one of claims 1 to 3, wherein a charge rate of the first charge current and/or the second charge current ranges from 2C to 10C.

5. The method according to any one of claims 1 to 4, wherein a discharge rate of the first discharge current ranges from 0.1C to 1C.

6. The method according to any one of claims 1 to 5, wherein a ratio of the first accumulated discharge quantity threshold value to the first accumulated charge quantity threshold value is less than or equal to 10%.

7. The method according to any one of claims 1 to 6, wherein acquiring, by the BMS, a first charge current comprises:
acquiring, by the BMS, a state parameter of the battery, and determining the first charge current according to the state parameter; and/or
acquiring, by the BMS, a first discharge current comprises:
acquiring, by the BMS, a state parameter of the battery, and determining the first discharge current according to the state parameter; and/or
acquiring, by the BMS, a second charge current comprises:
acquiring, by the BMS, a state parameter of the battery, and determining the second charge current according to the state parameter;
wherein the state parameter of the battery comprises at least one of the following parameters: a battery temperature, a battery voltage, a battery current, a state of charge of the battery, and a state of health of the battery.

8. The method according to any one of claims 1 to 7, wherein acquiring, by the BMS, a first charge current and sending the first charge current to a charge and discharge device comprises:
acquiring, by the BMS, the first charge current regularly and sending the first charge current to the charge and discharge device regularly; and/or
acquiring, by the BMS, a first discharge current and sending the first discharge current to the charge and discharge device comprises:
acquiring, by the BMS, the first discharge current regularly and sending the first discharge current to the charge and discharge device regularly; and/or
acquiring, by the BMS, a second charge current and sending the second charge current to the charge and discharge device comprises:
acquiring, by the BMS, the second charge current regularly and sending the second charge current to the charge and discharge device regularly.

9. The method according to any one of claims 1 to 8, wherein the method further comprises: acquiring, by the BMS, a first charge voltage and sending the first charge voltage to the charge and discharge device, wherein the first charge current and the first charge voltage are carried in a first battery charge lab message; and/or
the method further comprises: acquiring, by the BMS, a first discharge voltage and sending the first discharge voltage to the charge and discharge device, wherein the first discharge current and the first discharge voltage are carried in a second battery charge lab message; and/or
the method further comprises: acquiring, by the BMS, a second charge voltage and sending the second charge voltage to the charge and discharge device, wherein the second charge current and the second charge voltage are carried in a third battery charge lab message.

10. A method for charging a battery, comprising:
Receiving, by a charge and discharge device, a first charge current sent by a battery management system (BMS), and charging a battery based on the first charge current;
receiving, by the charge and discharge device, a first discharge current sent by the BMS, and controlling the battery to discharge based on the first discharge current, wherein the first discharge current is a discharge current sent by the BMS when a first accumulated charge quantity of the battery is greater than or equal to a first accumulated charge quantity threshold value and a voltage of a battery cell of the battery does not exceed a full charge voltage of the battery cell;
receiving, by the charge and discharge device, a second charge current sent by the BMS, and charging the battery based on the second charge current, wherein the second charge current is a charge current sent by the BMS when a first accumulated discharge quantity of the battery is greater than or equal to a first accumulated discharge quantity threshold value.

11. The method according to claim 10, wherein the method further comprises:
receiving, by the charge and discharge device, a second discharge current sent by the BMS, and controlling the battery to discharge based on the second discharge current, wherein the second discharge current is a discharge current sent by the BMS when a second accumulated charge quantity of the battery is greater than or equal to a second accumulated charge quantity threshold value and the voltage of the battery cell of the battery does not exceed the full charge voltage of the battery cell.

12. The method according to claim 10 or 11, wherein the method further comprises:
receiving, by the charge and discharge device, a charge stop command sent by the BMS, and stopping charging the battery, wherein the charge stop command is a command sent by the BMS when the voltage of the battery cell of the battery exceeds the full charge voltage of the battery cell.

13. The method according to any one of claims 10 to 12, wherein a charge rate of the first charge current and/or the second charge current ranges from 2C to 10C.

14. The method according to any one of claims 10 to 13, wherein a discharge rate of the first discharge current ranges from 0.1C to 1C.

15. The method according to any one of claims 10 to 14, wherein a ratio of the first accumulated discharge quantity threshold value to the first accumulated charge quantity threshold value is less than or equal to 10%.

16. The method according to any one of claims 10 to 15, wherein at least one of the first charge current, the first discharge current and the second charge current is determined by the BMS according to a state parameter of the battery;
wherein the state parameter of the battery comprises at least one of the following parameters: a battery temperature, a battery voltage, a battery current, a state of charge of the battery, and a state of health of the battery.

17. The method according to any one of claims 10 to 16, wherein receiving, by the charge and discharge device, a first charge current sent by the BMS comprises:
regularly receiving, by the charge and discharge device, the first charge current sent by the BMS; and/or
receiving, by the charge and discharge device, a first discharge current sent by the BMS comprises:
regularly receiving, by the charge and discharge device, the first discharge current sent by the BMS; and/or
receiving, by the charge and discharge device, a second charge current sent by the BMS comprises:
regularly receiving, by the charge and discharge device, the second charge current sent by the BMS.

18. The method according to any one of claims 10 to 17, wherein the method further comprises: receiving, by the charge and discharge device, a first charge voltage sent by the BMS, wherein the first charge voltage and the first charge current are carried in a first battery charge lab message; and/or
the method further comprises: receiving, by the charge and discharge device, a first discharge voltage sent by the BMS, wherein the first discharge voltage and the first discharge current are carried in a second battery charge lab message; and/or
the method further comprises: receiving, by the charge and discharge device, a second charge voltage sent by the BMS, wherein the second charge voltage and the second charge current are carried in a third battery charge lab message.

19. A battery management system (BMS), comprising:
an acquisition unit, configured to acquire a first charge current;
a sending unit, configured to send the first charge current to a charge and discharge device, thus making the charge and discharge device charge the battery based on the first charge current;
a processing unit, configured to determine a first accumulated charge quantity of the battery is greater than or equal to a first accumulated charge quantity threshold value and a voltage of a battery cell of the battery does not exceed a full charge voltage of the battery cell, and the acquisition unit further configured to acquiring a first discharge current;
wherein the sending unit is further configured to configured to send a first discharge current to the charge and discharge device, thus making the charge and discharge device control the battery to discharge based on the first discharge current;
the processing unit is further configured to determine a first accumulated discharge quantity of the battery is greater than or equal to a first accumulated discharge quantity threshold value, and the acquisition unit is further configured to acquire a second charge current; and
the sending unit is further configured to send a second charge current to the charge and discharge device, thus making the charge and discharge device charge the battery based on the second charge current.

20. The BMS according to claim 19, wherein the processing unit is further configured to determine a second accumulated charge quantity of the battery is greater than or equal to a second accumulated charge quantity threshold value and the voltage of the battery cell of the battery does not exceed the full charge voltage of the battery cell, and the acquisition unit is further configured to acquire a second discharge current; and
the sending unit is further configured to send a second discharge current to the charge and discharge device, thus making the charge and discharge device control the battery to discharge based on the second discharge current.

21. The BMS according to claim 19 or 20, wherein the processing unit is further configured to determine the voltage of the battery cell of the battery exceeds the full charge voltage of the battery cell, and the sending unit is further configured to send a charge stop command to the charge and discharge device, wherein the charge stop command being used for instructing the charge and discharge device to stop charging the battery.

22. The BMS according to any one of claims 19-21, wherein a charge rate of the first charge current and/or the second charge current ranges from 2C to 10C.

23. The BMS according to any one of claims 19 to 22, wherein a discharge rate of the first discharge current ranges from 0.1C to 1C.

24. The BMS according to any one of claims 19 to 23, wherein a ratio of the first accumulated discharge quantity threshold value to the first accumulated charge quantity threshold value is less than or equal to 10%.

25. The BMS according to any one of claims 19 to 24, wherein the acquisition unit is configured to acquire a state parameter of the battery, and determine the first charge current according to the state parameter; and/or
the acquisition unit is configured to acquire a state parameter of the battery, and determine the first discharge current according to the state parameter; and/or
the acquisition unit is configured to acquire a state parameter of the battery, and determine the first discharge current according to the state parameter;
wherein the state parameter of the battery comprises at least one of the following parameters: a battery temperature, a battery voltage, a battery current, a state of charge of the battery, and a state of health of the battery.

26. The BMS according to any one of claims 19 to 25, wherein the acquisition unit is configured to acquire the first charge current regularly, and the sending unit is configured to configured to send the first charge current to the charge and discharge device regularly; and/or
the acquisition unit is configured to configured to acquire the first discharge current regularly, and the sending unit is configured to send the first discharge current to the charge and discharge device regularly;
the acquisition unit is configured to acquire the second charge current regularly, and the sending unit is configured to send the second charge current to the charge and discharge device regularly.

27. The BMS according to any one of claims 19 to 26, wherein the acquisition unit is further configured to acquire a first charge voltage, the sending unit is further configured to send the first charge voltage to the charge and discharge device, wherein the first charge current and the first charge voltage are carried in a first battery charge lab message; and/or
the acquisition unit is further configured to acquire a first discharge voltage, the sending unit is further configured to send the first discharge voltage to the charge and discharge device, wherein the first discharge current and the first discharge voltage are carried in a second battery charge lab message; and/or
the acquisition unit is further configured to acquire a second charge voltage, the sending unit is further configured to send the second charge voltage to the charge and discharge device, wherein the second charge current and the second charge voltage are carried in a third battery charge lab message.

28. A charge and discharge device, comprising:
a receiving unit, configured to receive a first charge current sent by a battery management system (BMS);
a processing unit, configured to charge a battery based on the first charge current;
wherein the receiving unit is further configured to receive a first discharge current sent by the BMS, the processing unit is further configured to control the battery to discharge based on the first discharge current, wherein the first discharge current is a discharge current sent by the BMS when a first accumulated charge quantity of the battery is greater than or equal to a first accumulated charging threshold value and a voltage of a battery cell of the battery does not exceed a full charge voltage of the battery cell;
the receiving unit is further configured to receive a second charge current sent by the BMS, the processing unit is further configured to charge the battery based on the second charge current, wherein the second charge current is a charge current sent by the BMS when a first accumulated discharge quantity of the battery is greater than or equal to a first accumulated discharge quantity threshold value.

29. The charge and discharge device according to claim 28, wherein the receiving unit is further configured to receive a second discharge current sent by the BMS, the processing unit is further configured to control the battery to discharge based on the second discharge current, wherein the second discharge current is a discharge current sent by the BMS when a second accumulated charge quantity of the battery is greater than or equal to a second accumulated charging threshold value and a voltage of the battery cell of the battery does not exceed the full charge voltage of the battery cell.

30. The charge and discharge device according to claim 28 or 29, wherein the receiving unit is further configured to receive a charge stop command sent by the BMS, the processing unit is configured to stop charging the battery, wherein the charge stop command is a command sent by the BMS when the voltage of the battery cell of the battery exceeds the full charge voltage of the battery cell.

31. The charge and discharge device according to any one of claims 28 to 30, wherein a charge rate of the first charge current and/or the second charge current ranges from 2C to 10C.

32. The charge and discharge device according to any one of claims 28 to 31, wherein a discharge rate of the first discharge current is between 0.1C to 1C.

33. The charge and discharge device according to any one of claims 28 to 32, wherein a ratio of the first accumulated discharge quantity threshold value to the first accumulated charge quantity threshold value is less than or equal to 10%.

34. The charge and discharge device according to any one of claims 28 to 33, wherein at least one of the first charge current, the first discharge current and the second charge current is determined by the BMS according to a state parameter of the battery;
wherein the state parameter of the battery comprises at least one of the following parameters: a battery temperature, a battery voltage, a battery current, a state of charge of the battery, and a state of health of the battery.

35. The charge and discharge device according to any one of claims 28to 34, wherein the receiving unit is configured to receive the first charge current sent by the BMS regularly; and/or
the receiving unit is configured to receive the first discharge current sent by the BMS regularly; and/or
the receiving unit is configured to receive the second charge current sent by the BMS regularly.

36. The charge and discharge device according to any one of claims 28-35, wherein the receiving unit is further configured to receive a first charge voltage sent by the BMS, wherein the first charge voltage and the first charge current are carried in a first battery charge lab message; and/or
the receiving unit is further configured to receive a first discharge voltage sent by the BMS, wherein the first discharge voltage and the first discharge current are carried in a second battery charge lab message; and/or
the receiving unit is further configured to receive a second charge voltage sent by the BMS, wherein the second charge voltage and the second charge current are carried in a third battery charge lab message.

37. A battery management system (BMS), comprising: a processor and a storage, wherein the storage is configured to store a computer program, the processor is configured to call the computer program to execute the method for charging the battery according to any one of claims 1 to 9.

38. A charge and discharge device, comprising a processor and a storage, wherein the storage is configured to store a computer program, the processor is configured to call the computer program to execute the method for charging the battery according to any one of claims 10 to 18.
